# EUROPÄISCHE PATENTSCHRIFT

(11) **EP 1 870 641 B1**
(45) Veröffentlichungstag und Bekanntmachung des Hinweises auf die Patenterteilung: **18.12.2013**
(21) Anmeldenummer: 07011546.4
(22) Anmeldetag: 13.06.2007
(51) Int. Cl.: F24C 15/32, A21B 3/04, A47J 27/04, D06F 75/10, F22B 1/28, D06F 39/00

(54) **Verdampfereinrichtung und Verfahren zum Betrieb der Verdampfereinrichtung**
Vaporiser device and method for operating the vaporiser device
Dispositif d'évaporation et procédé de fonctionnement du dispositif d'évaporation

(30) Priorität: 20.06.2006 DE 102006029578
(43) Veröffentlichungstag der Anmeldung: 26.12.2007
(73) Patentinhaber: E.G.O. Elektro-Gerätebau GmbH, 75038 Oberderdingen (DE)
(72) Erfinder: Riffel, Michael, Dr., 75038 Oberderdingen (DE); Seidler, Christian, 75015 Bretten (DE)
(74) Vertreter: Patentanwälte Ruff, Wilhelm, Beier, Dauster & Partner

(56) Entgegenhaltungen:
- EP-A- 0 277 337
- EP-A- 1 724 530
- EP-A- 1 790 909
- EP-A- 1 914 479
- WO-A-2006/126778
- US-A- 5 355 840
- US-A1- 2006 000 821

## Beschreibung

### Anwendungsgebiet und Stand der Technik

Die Erfindung betrifft eine Verdampfereinrichtung nach dem Oberbegriff des Anspruchs 1. Die Erfindung betrifft auch ein Verfahren zum Betrieb einer Verdampfereinrichtung.

Ein Dampfgarer mit einem Verdampfer für Wasser ist beispielsweise aus der DE 10 2005 059 505 A1 bekannt. Der darin beschriebene Dampfgarer weist einen Wasservorrat auf, der mit einem Verdampfer zur Erzeugung von Wasserdampf in Verbindung steht. Sobald der Wasservorrat erschöpft ist, kann er jedoch nicht mehr als Dampfgarer verwendet werden sondern lediglich noch als herkömmlicher Backofen. Außerdem besteht die Möglichkeit, dass eine Heizvorrichtung des Dampfgarers beschädigt wird, wenn sie nicht durch das verdampfende Wasser gekühlt wird.

Aus der DE 84 33 630 U1 ist ein Behälter zum Erwärmen von Flüssigkeiten bekannt, der einen Nutzwasserbehälter aufweist, mit dem ein rohrartiges Schauglas in Verbindung steht. Der Nutzwasserbehälter ist mit dem Schauglas in einer Weise verbunden, die es erlaubt, dass Wasser aus dem Nutzwasserbehälter in das rohrartige Schauglas gelangen kann, wodurch der Füllstand des Nutzwasserbehälters ablesbar ist. Das Schauglas muss jedoch einsehbar angeordnet sein.

Weitere Verdampfer sind aus der US 2006/000821 und der nachveröffentlichten WO 2006/126 778 bekannt.

### Aufgabe und Lösung

Es ist Aufgabe der Erfindung, eine Verdampfereinrichtung mit einem Verdampfer und ein Verfahren zum Betrieb einer Verdampfereinrichtung zu schaffen, bei der zum Schutz der Heizvorrichtung keine Temperatursensoren nötig sind, die kleiner ist und leichter zu montieren ist, die die Menge des verdampften Wasser ermitteln kann und die auch bei wallendem Wasser präzise funktioniert.

Gelöst wird diese Aufgabe durch eine Verdampfereinrichtung mit den Merkmalen des Anspruchs 1 sowie durch ein Verfahren mit den Merkmalen des Anspruchs 8. Vorteilhafte sowie bevorzugte Ausgestaltungen der Erfindung sind Gegenstand der weiteren Ansprüche und werden im Folgenden näher erläutert. Der Wortlaut der Ansprüche wird durch ausdrückliche Bezugnahme zum Inhalt der Beschreibung gemacht. Obwohl manche der beschriebenen Merkmale nur einmal genannt werden, gelten sie unabhängig voneinander für sämtliche Ausgestaltungen und Ausführungsformen der Erfindung. Weiterhin ist die Reihenfolge der aufgelisteten Merkmale nicht bindend, sondern kann vielmehr entsprechend einer optimierten Verdampfereinrichtung oder eines optimierten Verfahrens abgeändert werden.

Vorteilhaft zeigt sich bei der Erfindung, dass die Füllstandsmessung auf eine einfache und kostengünstige Weise realisierbar ist. Es sind keine Temperatursensoren notwendig, mittels der die Temperatur der Heizvorrichtung bestimmt wird, um beispielsweise die Überhitzung der Heizvorrichtung zu unterbinden, wenn der Wasserbehälter im Wesentlichen vollständig entleert ist. Ein weiterer Vorteil zeigt sich darin, dass mittels der erfindungsgemäßen Füllstandsmessung die Füllstände, insbesondere Füllstandsextrema äußerst präzise und reproduzierbar bestimmbar sind, da das siedende, und aus diesem Grund auch wallende Wasser im Erkennungsbereich im Wesentlichen beruhigt ist. Dies wird dadurch erreicht, dass vorzugsweise nur im Bereich des Wasserbehälters eine Heizvorrichtung vorgesehen ist.

Gemäß der Erfindung ist der Erkennungsbereich in einem Seitenbereich des Verdampfers angeordnet und ein Innenraum des Erkennungsbereiches mittels einer Abtrennung von dem Wasservorrat getrennt.

Gemäß der Erfindung weist der Sensorbereich wenigstens zwei elektrisch leitende Bereiche auf, die im zumindest teilweise entleerten Zustand des Verdampfers gegeneinander und vom übrigen Erkennungsbereich elektrisch isoliert sind. Die voneinander elektrisch isolierten Bereiche des Sensorbereichs können beispielsweise eine Wandung des Erkennungsbereichs und ein Bauteil sein, das mit der Wandung in elektrisch isoliertem Eingriff steht. Die voneinander isolierten Bereiche können aber beispielsweise auch zwei Kondensatorplatten sein, zwischen denen sich das Dielektrikum, nämlich Wasser, Wasserdampf und/oder Luft befindet. Selbstverständlich muss jedoch die Flüssigkeit für die Funktion der Erfindung kein Wasser sein; jede andere verdampfbare bzw. im Haushalt handhabbare Flüssigkeit ist ebenfalls möglich. Im Folgenden wird hier nur der Begriff Wasser verwendet werden, dieser gilt jedoch äquivalent für die beschriebenen Flüssigkeiten.

Gemäß der Erfindung ragt ein Abschnitt des zumindest teilweise stabartig oder stiftartig ausgebildeten, horizontal verlaufenden Sensorbereichs in den Innenraum des Erkennungsbereiches hinein. Dadurch wird der Sensorbereich bzw. der Bereich vergrößert, der mit dem zu detektierenden Wasser in Kontakt stehen kann. So kann die Oberfläche des beruhigten Wassers im Erkennungsbereich, die bei im Wasserbehälter siedendem Wasser nur noch geringe aber dennoch vorhandene Wallbewegungen macht, auf einer größeren Fläche zur Detektion genutzt werden.

In einer weiteren Ausgestaltung der Erfindung schließt oder öffnet das Wasser im Verdampfer je nach Füllstand als Leiter einen Stromlaufpfad zwischen wenigstens zwei Teilen eines Sensors, wobei der Sensor ein Teil des Sensorbereichs ist. Auf diese Weise kann der Sensor bzw. der Sensorbereich besonders einfach aufgebaut werden.

Das Vorsehen von kanal- oder schlauchartigen Verbindungen zwischen dem Wasserbehälter und dem Erkennungsbereich ist gegebenenfalls vorteilhaft, wobei der Erkennungsbereich selber auch schlauchartig oder gemäß jeder anderen für die Erfindung sinnvollen Art ausgeführt sein kann. Vorteilhaft ist der Erkennungsbereich bzw. das Volumen des Erkennungsbereichs im Verhältnis zum Wasserbehälter bzw. dem Volumen des Wasserbehälters deutlich kleiner ausgebildet.

Die Erfindung kann außer in dem genannten Dampfgarer beispielsweise auch in einem Dampfbügeleisen, einem Dampfreinigungsgerät oder jedem anderen Küchengerät oder Haushaltsgerät als Verdampfereinrichtung verwendet werden, in dem ein Füllstand einer Betriebs- und/oder Verbrauchsflüssigkeit zu überwachen ist.

Die Beheizung des Wasserbehälters erfolgt insbesondere mittels einer sogenannten Dickschichtheizung. Andere Vorrichtung zur Erzeugung von Temperaturen, die dazu ausreichen, eine Flüssigkeit bis zur Siedetemperatur zu erwärmen, sind ebenfalls denkbar und unter Umständen zweckmäßig. Die Heizvorrichtung ist vorteilhaft lediglich im Bereich des Wasserbehälters angeordnet, nicht jedoch im Erkennungsbereich.

In Ausgestaltung der Erfindung weist der Erkennungsbereich wenigstens zwei Sensorbereiche zum Erkennen jeweils eines Füllstandes auf, insbesondere zum Erkennen eines maximalen und eines minimalen Füllstandes. Durch das Vorsehen von wenigstens zwei Sensorbereichen, wenigstens jeweils einen für die Detektion eines maximalen bzw. eines minimalen Füllstandes, wird vorteilhaft erreicht, dass der Wasserbehälter nicht versehentlich überfüllt wird oder nicht ausreichend befüllt betrieben wird. Dies kann dadurch realisiert sein, dass bei Erreichen des Minimalfüllungsstandes die Heizvorrichtung mittels einer Steuerung abgeschaltet und/oder ein optisches und/oder akustisches Warnsignal ausgegeben wird. Bei Erreichen des maximalen Füllstandes kann dieser ebenfalls beispielsweise mittels eines optischen und/oder akustischen Signals angezeigt werden. Die Signale ermöglichen, dass der Erkennungsbereich bzw. der Wasserbehälter nicht von außen einsehbar sein müssen, so dass deren Anordnung im Gerät ausschließlich funktionellen Bedingungen und dem zu Verfügung stehenden Platzangebot genügen muss. Es ist vorstellbar, dass im Wesentlichen alle vom Füllstand des Wasserbehälters abhängenden Vorgänge direkt und/oder indirekt mittels der Sensorsignale gesteuert werden.

Diese Ausgestaltung ist außerdem vorteilhaft, da durch Vorsehen wenigstens zweier Sensorbereiche für den maximalen und den minimalen Füllstand des Wasserbehälters auch die erzeugte Dampfmenge bestimmbar ist. Die Auflösung bzw. die Aktualität dieser Bestimmung erhöht sich natürlich mit der Anzahl der vorgesehenen Sensorbereiche.

In Ausgestaltung der Erfindung ist der Sensorbereich zumindest teilweise metallisch ausgebildet und/oder zumindest teilweise mit einer metallischen Beschichtung versehen. Die Verwendung von Metallen oder metallischen Beschichtungen bewirkt zum Einen die Leitfähigkeit der Sensorbereiche und zum Anderen kann das Metall bzw. die metallische Beschichtung aus dem gleichen und/oder einem ähnlichen Material hergestellt sein wie der Erkennungsbereich, der Wasserbehälter oder das Küchengerät. Dadurch wird die Reinigung vereinfacht, da bekannte und bewährte Reinigungsmittel verwendet werden können und keine Spezialreiniger benötigt werden.

Gemäß einer Ausgestaltung der Erfindung kann die Verdampfereinrichtung eine Auswertungsvorrichtung aufweisen, wobei die Auswertungsvorrichtung zur Ausgabe eines Steuerungssignals zur Steuerung eines Küchengeräts und/oder des Verdampfers in Abhängigkeit der Sensorsignale ausgebildet ist. Die Auswertungsvorrichtung kann mittels Relaisschaltungen, einer SPS oder einem Mikroprozessor realisiert sein. Wie vorstehend bereits ausgeführt, kann die Auswertungsvorrichtung beispielsweise dazu herangezogen werden, ein Warnsignal in Abhängigkeit vom Füllstand auszugeben. Die Auswertungsvorrichtung kann beispielsweise in einer Steuervorrichtung der Verdampfereinrichtung implementiert sein.

In Ausgestaltung der Erfindung ist die Auswertungsvorrichtung zur Ermittlung eines elektrischen Widerstandes zwischen wenigstens zwei Teilen eines Sensors ausgebildet. Der elektrische Widerstand zwischen diesen beiden Teilen des Sensors verändert sich je nach Füllstand des Erkennungsbereichs. Sind die beide Teile des Sensors mit Wasser im Erkennungsbereich in Kontakt, kann ein elektrischer Strom zwischen dem einen Teil des Sensors und dem anderen Teil des Sensors fließen. Der dabei gemessene elektrische Widerstand ist der des Wassers, also vergleichsweise klein nach Art eines Kurzschlusses. Sind die beiden Teile des Sensors nicht mit Wasser in Kontakt, so herrscht zwischen beiden ein vergleichsweise hoher Widerstand im MOhm-Bereich, da der Stromkreis zwischen den beiden Teilen nicht durch das Wasser geschlossen ist. Es reicht je nach Ausgestaltung der Erfindung für die Funktion der Auswertungsvorrichtung aus, dass die Auswertungsvorrichtung erkennt, ob ein Strom zwischen den beteiligten Teilen fließt, also ein kleiner Widerstand vorliegt, oder ob kein Strom fließt. Selbstverständlich kann auch vorgesehen sein, dass die Auswertungsvorrichtung derart ausgelegt ist, dass sie die expliziten, zwischen den beiden Teilen herrschenden Widerstandswerte ermitteln kann.

In Ausgestaltung der Erfindung ist die Auswertungsvorrichtung zur Überwachung bzw. Steuerung einer Befüllung des Verdampfers und/oder zur Ermittlung der Anzahl der Befüllungen des Verdampfers ausgebildet. Die Befüllung des Verdampfers bzw. des Wasserbehälters kann von der Auswertungsvorrichtung gesteuert werden, indem sie entsprechende Signale für den Füllstand auslöst, beispielsweise optische und/oder akustische Signale. Dies kann mit oder ohne einen gleichzeitigen Eingriff in die Heizungssteuerung erfolgen. Denkbar ist auch, dass die Auswertungsvorrichtung eine automatische Befüllung einleitet, wenn der Wasserbehälter seinen minimalen Füllstand erreicht hat, beispielsweise indem die Auswertungsvorrichtung ein Einlassventil öffnet, durch das eine Frischwasserleitung mit dem Wasserbehälter verbunden ist.

Bei dem Verfahren zur Lösung der der Erfindung zugrundeliegenden Aufgabe zum Betreiben einer Verdampfereinrichtung mit einer Auswertungsvorrichtung wird eine Wallbewegung des bis in den Bereich seines Siedepunkts erhitzten Wassers mittels einer Verbindungsleitung zwischen dem Wasserbehälter und dem Erkennungsbereich gedämpft. Un-terstützt werden kann diese Dämpfung noch dadurch, dass nur der Wasserbehälter beheizt wird, nicht jedoch der Erkennungsbereich.

Diese und weitere Merkmale gehen außer aus den Ansprüchen auch aus der Beschreibung und den Zeichnungen hervor, wobei die einzelnen Merkmale jeweils für sich alleine oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte und Zwischen-Überschriften beschränken die unter diesen gemachten Aussagen nicht in ihrer Allgemeingültigkeit.

### Kurzbeschreibung der Zeichnungen

Verschiedene, teilweise miteinander kombinierbare Ausführungsformen der Erfindung sind in den Zeichnungen schematisch dargestellt und werden im Folgenden näher erläutert. In den Zeichnungen zeigen:
- Fig.1: eine teilgeschnittene Seitenansicht einer erfindungsgemäßen Verdampfereinrichtung mit einem erfindungsgemäßen Verdampfer,
- Fig.2: eine geschnittene Seitenansicht eines Bereichs eines erfindungsgemäßen Verdampfers einer Verdampfereinrichtung mit einem Erkennungsbereich einer ersten Ausführungsform,
- Fig.3: eine Detailansicht eines Sensorbereichs gemäß III in Fig.2,
- Fig.4: eine geschnittene Seitenansicht eines Bereichs eines erfindungsgemäßen Verdampfers einer Verdampfereinrichtung mit einem Erkennungsbereich einer zweiten Ausführungsform,
- Fig.5: eine geschnittene Seitenansicht eines Bereichs eines erfindungsgemäßen Küchengeräts mit einem Erkennungsbereich einer dritten Ausführungsform,
- Fig.6: eine Detailansicht eines Sensorbereichs gemäß VI in Fig.5, und
- Fig.7: eine geschnittene Seitenansicht eines Bereichs eines erfindungs-gemäßen Verdampfers eines Küchengeräts mit einem Erken-nungsbereich einer vierten Ausführungsform.

### Detaillierte Beschreibung der Zeichnungen

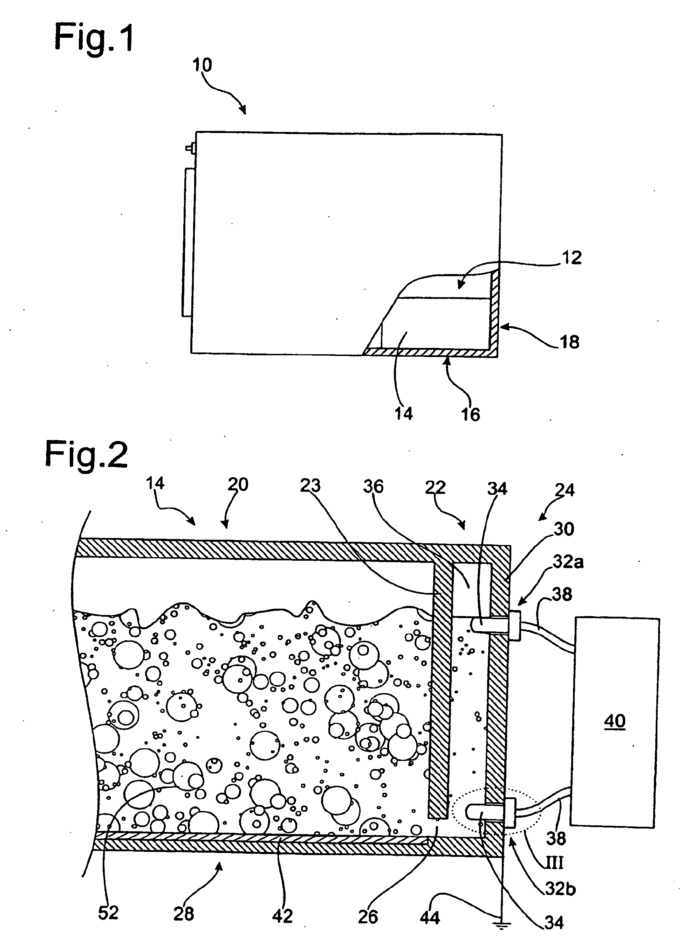

In Fig.1 ist eine teilgeschnittene Seitenansicht eines Küchengeräts 10 als Verdampfereinrichtung dargestellt, beispielsweise eines Dampfgarers. In dessen Inneren 12 ist ein Verdampfer 14 beispielhaft im Bereich eines Bodens16 bzw. im Bereich einer Hinterwand 18 des Küchengeräts 10 angeordnet.

Der in Fig.2 dargestellte Verdampfer 14 weist einen Wasserbehälter 20 auf, der sozusagen einen Wasservorrat bzw. einen Wasservorratsbehälter bildet, sowie einen rohrartigen Erkennungsbereich 22. Der Erkennungsbereich 22 ist in einem Seitenbereich 24 des Verdampfers 14 angeordnet und ist mittels eines Verbindungskanals 26 mit dem Wasserbehälter 20 verbunden. Der Verbindungskanal 26 ist im Bereich einer Bodenfläche 28 des Verdampfers 14 vorgesehen. In einem Bereich der Bodenfläche 28, über dem sich der Wasserbehälter 20 erstreckt, ist eine Heizvorrichtung 42 angeordnet. Diese Heizvorrichtung 42 ist als so genannte Dickschichtheizung ausgebildet. In einer Seitenwand 30 des Erkennungsbereichs 22 sind zwei Sensoren 32 vorgesehen, in denen jeweils ein stiftartiges und elektrisch leitfähiges Sensorteil 34 angeordnet ist, wobei die Stifte etwa doppelt so lang wie breit sind. Die stiftartigen Sensorteile 34 treten jeweils durch die Seitenwand 30 von außerhalb des Erkennungsbereichs 22 durch und ragen in einen Innenraum 36 des Erkennungsbereichs 22 hinein. Der Innenraum 36 ist durch eine Abtrennung 23 von dem Wasservorrat getrennt. Die Sensorteile 34 sind jeweils mittels eines Leiters 38 mit einer Auswertungsvorrichtung 40 verbunden. Der Verdampfer 14 ist elektrisch leitfähig ausgebildet und mit einem Erd-Potential 44 verbunden.

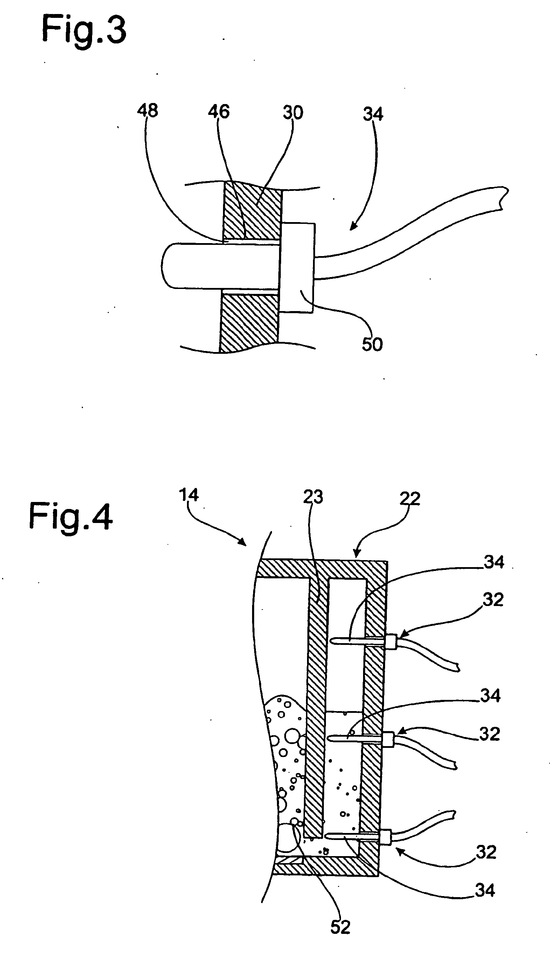

Aus der in Fig.3 gezeigten Detailansicht eines Sensors gemäß III in Fig.2 ist ersichtlich, dass das stiftartige Sensorteil 34 die Seitenwand 30 in einer Ausnehmung 46 durchtritt. Das stiftartige Sensorteil 34 ist in einer Hülse 48 o.ä. aufgenommen, die nicht elektrisch leitfähig ist und somit als elektrischer Isolator zwischen der Seitenwand 30 und dem stiftartigen Sensorteil 34 dient. An dem Sensorteil ist ein isolierender Flansch 50 vorgesehen. Der Flansch 50 dient als Anlagefläche des Sensorteils 34 an der Seitenwand 30. Mittels der Hülse 48 und dem Flansch 50 ist der elektrisch leitende Teil des Sensorteils 34 elektrisch vollständig vom Verdampfergehäuse isoliert.

Anhand der Fig.2 und Fig.3 ist zu erkennen, dass die Detektion des Füllstandes des Verdampfers 14 nach Art eines Quecksilber-Bewegungsschalters erfolgt. Stehen also die stiftartigen Sensoren 34 mit Wasser 52 in Kontakt, kann ein Sensor-Strom von der Auswerteeinheit 40 über den Leiter 38 in das Sensorteil 34 fließen und von dort über das Wasser 52 beispielsweise in die Seitenwand 30 und/oder ein anderes Gehäuseteil des Verdampfers 14, das mit dem Erd-Potential 44 verbunden ist. Aufgrund des fließenden Stroms kann die Auswertungsvorrichtung 40 dann feststellen, dass das Sensorteil 34 zumindest teilweise von Wasser 52 umgeben ist. Fällt der Füllstand des Verdampfers 14 unter den Sensorteil 34, so wird der beschriebene Strompfad unterbrochen. Die Auswertungsvorrichtung 40 kann auf diese Weise feststellen, ob der Strompfad zwischen Sensorteil 34 und dem Erd-Potential 44 durch das Wasser 52 kurzgeschlossen ist, also ein sehr geringer elektrischer Widerstand vorherrscht, oder ob der Strompfad unterbrochen ist, also ein unendlich großer Widerstand vorherrscht.

Durch den Verbindungskanal 26 zwischen dem Erkennungsbereich 22 und dem Wasserbehälter 20, die ansonsten durch die Abtrennung 23 voneinander abgetrennt sind, und das Anordnen der Heizung 42 lediglich im Bereich des Wasserbehälters 20 ergeben sich zwei vorteilhafte Effekte. Zum Einen gelangt Wasser 52, das in den Wasserbehälter 20 gefüllt wird, durch den Verbindungskanal 26 auch in den Erkennungsbereich 22 und die Füllstände im Wasserbehälter 20 und im Erkennungsbereich 22 gleichen sich an, da der Behälter 20 und der Bereich 22 nach Art von so genannten kommunizierenden Röhren miteinander verbunden sind. Zum Anderen wird eine Wallbewegung des mittels der Heizvorrichtung 42 auf Siedetemperatur erwärmten Wassers 52 durch den Verbindungskanal 26 gedämpft und breitet sich im Wesentlichen nicht im Erkennungsbereich 22 aus. Dadurch wird die Füllstandsmessung präziser.

Die beiden Sensoren 32 in Fig.2 sind so angeordnet, dass mittels des Sensors 32a ein erster bzw. maximaler Füllstand detektiert werden kann und mittels des Sensors 32b ein zweiter bzw. minimaler Füllstand, wobei in Fig.2 ein maximaler Füllstand dargestellt ist. Bei Erreichen der beiden Füllstandsextrema gibt die Auswertungsvorrichtung 40 dann beispielsweise entsprechende Steuer- und/oder Warnsignale aus. Diese können akustischer und/oder optischer Art sein. Es ist jedoch auch möglich, dass die Auswertungseinheit 40 beispielsweise in eine Heizungssteuerung eingreift, Füllzyklen zählt und/oder Dampfmengen bestimmt.

Eine weitere Ausbildung der erfindungsgemäßen Verdampfereinrichtung 10 ist in Fig.4 dargestellt, wobei sich diese Ausgestaltung in der Form und der Anzahl, nämlich drei der Sensoren 32 bzw. der Sensorteile 34 und einem Füllstand zwischen dem Maximum und dem Minimum, von dem in Fig.2 dargestellten unterscheidet. Die stiftartigen Sensorteile 34 weisen eine große Länge auf, die ein Mehrfaches der Breite der Stifte darstellt. Die Länge ist jedoch so bemessen, dass die Stifte nicht mit der Wandung des Erkennungsbereichs 22 in Kontakt stehen, bzw. dass sich dazwischen kein Wassertropfen auf Grund von Adhäsions- oder Kohäsionskräften bilden kann. Durch das Vorsehen von drei Sensoren 32 wird die Auflösung der Füllstandsmessung verbessert, so dass neben den Füllstandsextrema auch Zwischenstände detektiert werden können. Die in Fig.4 dargestellten drei Sensoren 32 sind jedoch nur beispielhaft, da auch noch beliebig viele weitere Sensoren 32 vorgesehen werden können, um die Auflösung weiter zu erhöhen. In Fig.4 ist der Verdampfer 14 etwa bis zur Hälfte mit Wasser 52 gefüllt.

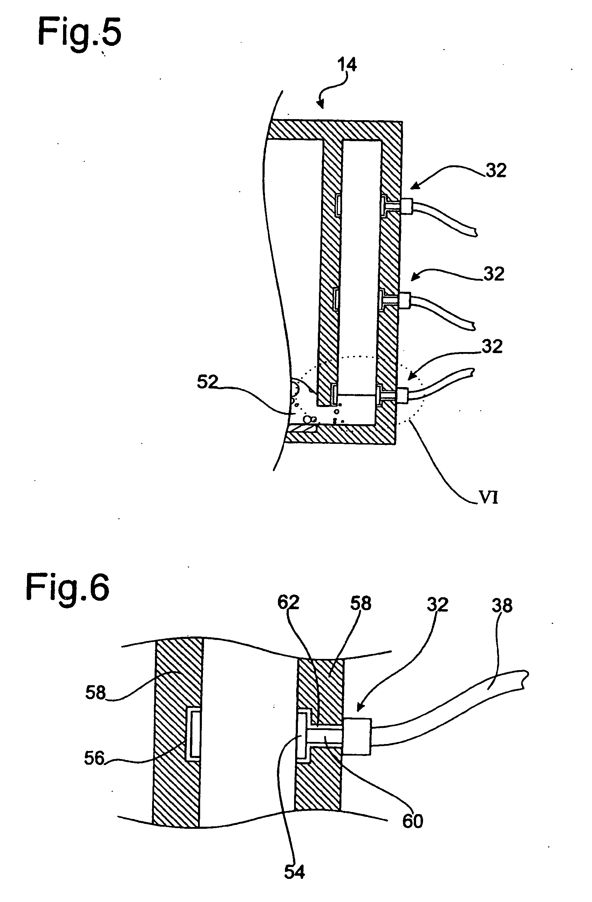

Der Verdampfer 14 in Fig.5 stellt eine weitere Ausgestaltung der Sensoren 32 dar, die in Verbindung mit Fig.6 deutlich wird. Die Sensorteile 54 sind gemäß Fig.5 und Fig.6 ringartig ausgebildet und sind in Ausnehmungen 56 eingebracht, die in die Wandungen 58 des Erkennungsbereichs 22 eingebracht sind. Die ringartigen Sensorteile 54 sind mittels Stiften 60 mit dem Leiter 38 verbunden, wobei der ringartige Sensorteil 54 und der Stift 60 mittels einer elektrisch isolierenden Schicht und/oder eines elektrisch isolierenden Bauteils 62 von der Wandung 58 getrennt sind.

Der in Fig.5 dargestellte Verdampfer 14 unterschiedet sich außerdem dahingehend von den vorhergehend beschriebenen Verdampfern, dass der Füllstand des Wassers 52 annähernd das Füllstandsminimum erreicht hat.

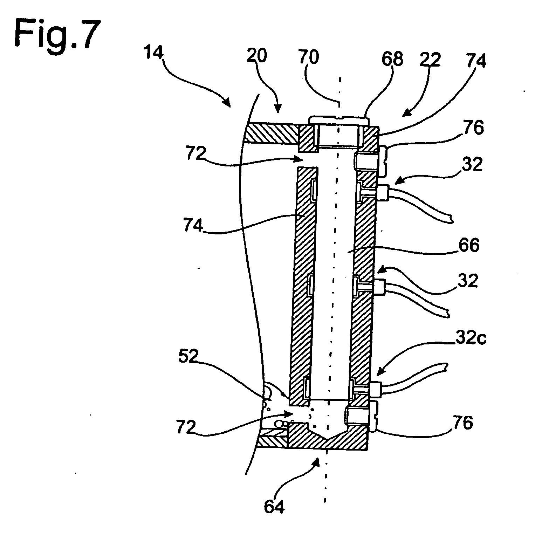

In Fig.7 ist eine weitere Ausgestaltung der Verdampfereinrichtung 10 dargestellt, bei der der Erkennungsbereich 22 als separates Bauteil 64 an dem Wasserbehälter 20 angeordnet ist. Das separate Bauteil 64 ist becherartig ausgebildet, wobei ein Flüssigkeitsaufnahme-Bereich 66 der Becherform mittels einer Sackbohrung in das Bauteil 64 eingebracht ist, die an ihrer offenen Seite mit einer Verschlussschraube 68 verschlossen ist. Quer zur Längsachse 70 der Bohrung sind in das Bauteil 64 Ausnehmungen 72 eingebracht, die beide Außenwandungen 74 des Bauteils vollständig durchtreten, wobei eine der Ausnehmungen 72 im Bereich des Bodens des Bauteils 64 und die andere Ausnehmung 72 im Bereich der Verschlussschraube 68 angeordnet ist. Die Ausnehmungen 72 sind auf der vom Wasserbehälter 20 abgewandten Seite des Erkennungsbereichs 22 mit Verschlussschrauben 76 verschlossen. In den Wandungen 74 des Bauteils sind auch in dieser Ausgestaltung Sensoren 32 vorgesehen, deren Aufbau denen der Sensoren 32 in Fig.6 gleicht.

Im Unterschied zu den vorstehend beschriebenen Ausgestaltungen der Verdampfereinrichtung 10 hat der Füllstand des Verdampfers 14 in Fig.7 sein Minimum erreicht. Der Sensorteil 32c ist also, wie auch die beiden anderen Sensorteile, nicht mehr mit Wasser 52 in Kontakt.

## Patentansprüche

1. Verdampfereinrichtung (10) mit einem Verdampfer (14) für Wasser (52), insbesondere ein Dampfgarer, wobei der Verdampfer (14) einen beheizbaren Wasserbehälter (20) aufweist, wobei der Verdampfer (14) auch einen an den Wasserbehälter (20) nach Art von kommunizierenden Röhren angeschlossenen Erkennungsbereich (22) zum Erkennen des Füllstandes des Wasserbehälters (20) aufweist, wobei der Erkennungsbereich (22) vorzugsweise rohr- und/oder kanalartig ausgebildet ist und wenigstens einen Sensorbereich (32) zum Detektieren des Füllstandes aufweist, wobei ein Abschnitt (34) des wenigstens einen Sensorbereichs (32) zumindest teilweise stabartig oder stiftartig ausgebildet ist, **dadurch gekennzeichnet, dass** der Erkennungsbereich (22) in einem Seitenbereich (24) des Verdampfers (134) angeordnet ist und ein Innenraum (36) des Erkennungsbereiches (22) mittels einer Abtrennung (23) von dem Wasservorrat getrennt ist, wobei der wenigstens eine
Sensorbereich (32) wenigstens zwei elektrisch leitende Bereiche (24, 34, 74) aufweist, die im zumindest teilweise entleerten Zustand des Verdampfers (14) gegeneinander elektrisch isoliert sind, und wobei der Abschnitt (34) des wenigstens einen Sensorbereichs (32) horizontal verlaufend in den Innenraum (36) des Erkennungsbereiches (22) hineinragt.

2. Verdampfereinrichtung nach Anspruch 1, **dadurch gekennzeichnet, dass** das zu verdampfende Wasser (52) im Verdampfer (14) je nach Füllstand als Leiter einen Stromlaufpfad zwischen wenigstens zwei Teilen (24, 34, 74) eines Sensors schließt oder öffnet, wobei der Sensor ein Teil des wenigstens einen Sensorbereichs (32) ist.

3. Verdampfereinrichtung nach einem der vorstehenden Ansprüche, **dadurch gekennzeichnet, dass** der Erkennungsbereich (22) wenigstens zwei Sensorbereiche (32) zum Erkennen jeweils eines Füllstandes aufweist, insbesondere zum Erkennen eines maximalen und eines minimalen Füllstandes.

4. Verdampfereinrichtung nach einem der vorstehenden Ansprüche, **dadurch gekennzeichnet, dass** der wenigstens eine Sensorbereich (32) zumindest teilweise metallisch ausgebildet ist und/oder zumindest teilweise mit einer metallischen Beschichtung versehen ist.

5. Verdampfereinrichtung nach einem der vorstehenden Ansprüche, **gekennzeichnet durch** eine Auswertungsvorrichtung (40), die ausgebildet ist zur Ausgabe eines Steuerungssignals zur Steuerung der Verdampfereinrichtung (10) und/oder des Verdampfers (14) in Abhängigkeit der Sensorsignale.

6. Verdampfereinrichtung nach Anspruch 5, **dadurch gekennzeichnet, dass** die Auswertungsvorrichtung (40) zur Ermittlung eines elektrischen Widerstandes zwischen wenigstens zwei Teilen (24, 34, 74) eines Sensors (32) ausgebildet ist.

7. Verdampfereinrichtung nach Anspruch 5 oder 6, **dadurch gekennzeichnet, dass** die Auswertungsvorrichtung (40) zur Überwachung und/oder Steuerung einer Befüllung des Verdampfers (14) und/oder zur Ermittlung der Anzahl der Befüllungen des Verdampfers (14) ausgebildet ist.

8. Verfahren zum Betrieb einer Verdampfereinrichtung (10) nach einem der Ansprüche 5 bis 7, **dadurch gekennzeichnet, dass** eine Wallbewegung des bis in den Bereich des Siedepunkts erhitzten Wassers (52) im Erkennungsbereich (22) gedämpft wird, wobei die Dämpfung der Wallbewegung mittels einer Verbindungsleitung (26, 72) zwischen dem Wasserbehälter (20) und dem Erkennungsbereich (22) erfolgt.

## Claims

1. A vaporiser device (10) having an evaporator (14) for water (52), in particular a steam cooker, wherein the evaporator (14) includes a heated water tank (20), wherein the evaporator (14) also includes a detection zone (22) for detecting the filling level of the water tank (20) and connected to the water tank (20) according to the principle of communicating pipes, wherein the detection zone (22) preferably is in a tubular and/or duct-type design, and has at least one sensor zone (32) for detecting the filling level, wherein a section (34) of the at least one sensor zone (32) at least partially is in a rod-type or pin-type design, **characterized in that** the detection zone (22) is disposed in a lateral zone (24) of the evaporator (134) and an interior compartment (36) of the detection zone (22) is separated from the water supply by means of a partition (23), wherein the at least one sensor zone (32) includes at least two electrically conductive zones (24, 34, 74) which are electrically insulated relative to another in the at least partially drained condition of the evaporator (14), and wherein the section (34) of the at least one sensor zone (32) is extending horizontally and projecting into the interior space (36) of the detection zone (22).

2. The vaporiser device according to claim 1, **characterized in that** the water (52) to be vaporised in the evaporator (14) depending on the filling level is a conductor to close or open a power flow path between at least two parts (24, 34, 74) of a sensor, wherein the sensor is part of the at least one sensor zone (32).

3. The vaporiser device according to any one of the preceding claims, **characterized in that** the detection zone (22) includes at least two sensor zones (32) each for detecting a respective filling level, in particular for detecting a maximum and a minimum filling level.

4. The vaporiser device according to any one of the preceding claims, **characterized in that** the at least one sensor zone (32) is at least partially metallic and/or at least partially provided with a metallic coating.

5. The vaporiser device according to any one of the preceding claims, **characterized by** an evaluating device (40) arranged so as to output a control signal for controlling the vaporiser device (10) and/or the evaporator (14) in response to the sensor signals.

6. The vaporiser device according to claim 5, **characterized in that** the evaluating device (40) is arranged so as to determine an electric resistance between at least two parts (24, 34, 74) of a sensor (32).

7. The vaporiser device according to claim 5 or 6, **characterized in that** the evaluating device (40) is arranged so as to monitor and/or control filling of the evaporator (14) and/or to determine the number of fillings of the evaporator (14).

8. A method for operating a vaporiser device (10) according to any one of the claims 5 to 7, **characterized in that** a boiling motion of the water (52) heated up to the range of the boiling point is attenuated in the detection zone (22), wherein the attenuation of the boiling motion is caused by means of a connecting line (26, 72) between the water tank (20) and the detection zone (22).

## Revendications

1. Dispositif d'évaporation (10) doté d'un évaporateur (14) d'eau (52), notamment cuiseur à vapeur, l'évaporateur (14) comprenant un réservoir d'eau (20) chauffable, l'évaporateur (14) comportant également une zone de détection (22) pouvant être rattachée au réservoir d'eau (20) à la façon de tubes communiquant en vue d'identifier l'état de remplissage du réservoir d'eau (20), la zone de détection (22) étant de préférence réalisée sous la forme de tubes et/ou de canaux et comprenant au moins une zone de capteur (32) permettant de détecter l'état de remplissage, une section (34) de l'au moins une zone de capteur (32) prenant au moins en partie la forme d'une tige ou d'une pointe, **caractérisé en ce que** la zone de détection (22) est disposée dans une zone latérale (24) de l'évaporateur (134) et qu'un espace intérieur (36) de la zone de détection (22) est séparé de la réserve d'eau par un élément de séparation (23), l'au moins une zone de capteur (32) comprenant au moins deux zones (24, 34, 74) électriquement conductrices isolées l'une par rapport à l'autre sur le plan électrique dans un état au moins en partie vidé de l'évaporateur (14) et la section (34) de l'au moins une zone de capteur (32) saillant de façon horizontale en s'étendant dans l'espace intérieur (36) de la zone de détection (22).

2. Dispositif d'évaporation selon la revendication 1, **caractérisé en ce que** l'eau (52) à évaporer se trouvant dans l'évaporateur (14) ouvre ou ferme respectivement, en fonction de l'état de remplissage, une voie de circulation de courant située entre au moins deux parties (24, 34, 74) d'un capteur du fait de son pouvoir conducteur, le capteur étant une partie de l'au moins une zone de capteur (32).

3. Dispositif d'évaporation selon l'une quelconque des revendications précédentes, **caractérisé en ce que** la zone de détection (22) comporte au moins deux zones de capteur (32) permettant d'identifier respectivement un état de remplissage, notamment d'identifier un état de remplissage maximal et minimal.

4. Dispositif d'évaporation selon l'une quelconque des revendications précédentes, **caractérisé en ce que** l'au moins une zone de capteur (32) est réalisée au moins en partie en métal et/ou est pourvue au moins en partie d'un revêtement métallique.

5. Dispositif d'évaporation selon l'une quelconque des revendications précédentes, **caractérisé par** la présence d'un dispositif d'analyse (40) conçu pour émettre un signal de commande servant à commander le dispositif d'évaporation (10) et/ou l'évaporateur (14) en fonction des signaux de capteur.

6. Dispositif d'évaporation selon la revendication 5, **caractérisé en ce que** le dispositif d'analyse (40) est conçu pour déterminer une résistance électrique entre au moins deux parties (24, 34, 74) d'un capteur (32).

7. Dispositif d'évaporation selon la revendication 5 ou 6, **caractérisé en ce que** le dispositif d'analyse (40) est conçu pour surveiller et/ou commander le remplissage de l'évaporateur (14) et/ou pour déterminer le nombre de remplissages de l'évaporateur (14).

8. Procédé de fonctionnement d'un dispositif d'évaporation (10) selon l'une quelconque des revendications 5 à 7, **caractérisé en ce qu'**un mouvement de bouillonnement de l'eau (52) chauffée jusqu'au point d'ébullition est amorti dans la zone de détection (22), l'amortissement du mouvement de bouillonnement étant réalisé à l'aide d'une conduite de jonction (26, 72) placée entre le réservoir d'eau (20) et la zone de détection (22).
